# EUROPEAN PATENT SPECIFICATION

(11) **EP 0 517 883 B1**
(45) Date of publication and mention of the grant of the patent: **25.09.1996**
(21) Application number: 92902423.0
(22) Date of filing: 12.12.1991
(51) Int. Cl.: B29C 67/24, B29D 29/00

(54) **HIGH TEMPERATURE POLYURETHANE BELT**
HOCHTEMPERATUR BESTANDIGER RIEMEN AUS POLYURETHAN
COURROIE EN POLYURETHANE RESISTANTE AUX TEMPERATURES ELEVEES

(30) Priority: 27.12.1990 US 633510; 03.12.1991 US 801231
(43) Date of publication of application: 16.12.1992
(73) Proprietor: THE GATES RUBBER COMPANY, Denver Colorado 80209 (US)
(72) Inventor: PATTERSON, Philip, M., Littleton, CO 80123 (US); COPELAND, Vicky C., Lakewood, CO 80227 (US)
(74) Representative: Carpmael, John William Maurice
(86) International application number: US9109336
(87) International publication number: WO9212000

(56) References cited:
- EP-A- 0 408 201
- EP-A- 0 410 240
- US-A- 4 297 444
- US-A- 4 420 570
- US-A- 4 435 349
- WORLD PATENTS INDEX LATEST Section Ch, Week 19, Derwent Publications Ltd., London, GB; Class A, AN 91-135780 & JP,A,3 071 818
- PATENT ABSTRACTS OF JAPAN vol. 013, no. 052 (M-794) & JP,A,63 257 613

## Description

This invention relates generally to endless polyurethane belts and, more particularly, to improved belts resulting from enhanced elastomer composition and formation. Specifically, the present invention relates to an improved endless belt in the form of power transmission belts, V-belts, micro-ribbed belts and the like, having enhanced temperature resistance properties while undergoing dynamic load during operation.

It has been recognized that endless belts, such as power transmission belts, V-belts, or micro-ribbed belts, and the like, constructed from polyurethane elastomers offer a number of significant advantages over conventional rubber belting. Among these advantages are that an elastomeric belt is less susceptible to flex fatigue, can be driven around smaller sheaves, and demonstrates improved load life. These belts may be vacuum spin cast in a single operation, injection molded, or batch casted as compared to the numerous steps required to build conventional rubber tooth-type belts. However, many of the castable timing belts, and particularly those constructed of urethane, are often noisier than a comparable rubber belt due in part to a difference in the coefficient of friction of the material. Urethane belts have a higher modulus and are generally more aggressive as they enter and leave a sprocket or sheave and build up considerable heat at the interfaces. This heat buildup reduces the efficiency of the belt, and the higher operating temperatures can change the modulus and reduce belt life considerably by lowering the tear strength of the teeth or by attacking the bond between the elastomeric body and the tensile cord embedded therein.

Examples of power transmission belts, V-belts and micro-ribbed belts are disclosed in U.S. Patents No. 3,138,962, No. 3,200,180, No. 4,330,287 and No. 4,332,576. Examples of formation of such belts are readily disclosed in U.S. Patent No. 3,200,180 as indicated above and Nos. 3,772,928 and 4,066,732. These patent references are merely examples of the types of belts and state of the art of formation thereof.

One solution to the noise and heat buildup problem in such belts has been to reduce the coefficient of friction of the sheath engaging surface of the belt by isolating or removing as much of the elastomer as possible from near the surface of the belt which comes in contact with the sprocket teeth or flanges. Such an approach is taken in U.S. Patent No. 3,772,929. Another way of dealing with the noise and heat degeneration problem is disclosed in U.S. Patent No. 3,964,328. In this particular patent reference, a layer of elastomer impervious material is utilized during the casting operation and bonded to one side of a wear-resistant fabric.

The references provided above deal primarily with spin cast and injection molded polyurethane-based elastomers. Such polyurethane-based elastomers are often prepared by reacting a relatively high equivalent weight active hydrogen-containing material such as a polyol, and a relatively low equivalent weight active hydrogen-containing material, such as a chain extender, with a polyisocyanate. In preparing the elastomer, the reactive components and any catalyst or other optional additives are generally blended and reacted together and then transferred to a mold of suitable shape where the formulation is cured. In typical injection molding, the mixed material is reacted and heated and then injected into a cold mold to solidify and cure the product. Any tensile members for belt reinforcement are previously placed in the mold. It is typical practice to cure the elastomer in the mold until it is capable of maintaining the molded shape, and then demolding the elastomer and post-curing it until the polymerization is complete. In this manner, the mold may be used more often thereby permitting higher production rates.

Since it is usually desirable to produce as many molded parts, and therefore as many belts, as possible in a given period of time, it is important that the residence time in the mold be as short as possible. Accordingly, it is desirable that the elastomer formulation cure relatively rapidly in the mold to a state which the elastomer can be demolded and postcured. In batch processing, however, it is necessary that the formulation not cure too quickly since some time is required to blend the batch components of the formulation and then transfer the blend to the mold. Once the elastomer sheath has been demolded and postcured, it is then cut into belts.

In addition to batch processing and standard thermoplastic injection molding, Reaction Injection Molding (RIM) is a technique for the rapid mixing, reacting and molding of large, fast curing urethane parts. While RIM polyurethane parts have traditionally been used in a variety of exterior body applications on automobiles where their light weight contributes to energy conservation, RIM polyurethane parts have not typically been used for dynamic application such as in the formation of belts. RIM parts are generally made by rapidly mixing active hydrogen containing materials with polyisocyanate and simultaneously injecting the mixture into a mold where reaction proceeds. These active hydrogen containing materials typically include a high molecular weight polyhydric polyether and/or a low molecular weight active hydrogen containing compound, for example, a chain extender. Moreover, RIM parts for automobile applications typically are reacted very quickly and demold in 1-2 minutes. After reaction and demolding, the parts may be subjected to an additional curing step by placing them at an ambient temperature of about 121°C (250° F) or greater for 4-24 hours. Unfortunately, the extreme rapid reaction time may causes a loss of control over the morphological structure.

Typical RIM elastomers and their preparation include U.S. Patent No. 4,806,615, No. 4,742,090, No. 4,404,353, No. 4,732,919, No. 4,530,941 and No. 4,607,090. Typical of accepted RIM practice is to place all components except for the isocyanate in one vessel (B-side) and the isocyanate in another vessel (A-side) prior to reaction, and then admixing these A and B side components together in a mold. U.S. Patent No. 4,297,444 discloses a modification to this traditional procedure. In this modification, the reacting of a portion of the high molecular weight polyether with a portion of the isocyanate is performed, while the chain extender and remaining polyether are admixed together along with the prepolymer in a RIM process to react the components to form a RIM polyurethane elastomer.

EP-A-0410240, which was published after the earliest priority date of the present application but filed before, describes a process for the preparation of polyurea - polyurethane elastomers. The process is a RIM process at an isocyanate index of about 95 to about 110, using an isocyanate prepolymer having an isocyanate content of about 4-10 wt.% and a molecular weight range of about 1000-4000 with diamine chain extender, the reaction being carried out in the substantial absence of compounds having isocyanate - reactive groups other than amino groups.

EP-A-0408201, which was also published after the earliest priority date of the present application but filed before, describes another RIM process for preparing elastomeric polyurethane or polyurethane - urea polymers. The process comprises reacting a polyisocyanate with a relatively high equivalent weight polyether. The process is characterized by employing as the polyether a polymer or copolymer of propylene oxide having at least two hydroxyl groups per molecule, an equivalent weight from 1000 to 5000 and a monofunctional species content (terminal unsaturation level) of about 0.04 milliequivalents per gram of polymer or less. The resulting elastomers are stated to be useful for dynamic applications such as belts and tow truck tyres, as well as in static applications such as beer keg skirts, automotive fascia and body panels.

As indicated previously, RIM elastomers have been readily utilized as automobile fascia and other components thereof, such as fenders, steering wheels, dash boards, and various other structural and flexible components. The significant advantage in the RIM processing technique is that admixing, reaction and molding injection all take place simultaneously to reduce the amount of residence time in the mold. Thus, RIM elastomers have found wide acceptance in a variety of consumer and industrial applications.

However, as indicated above, certain product applications necessitating the use of an endless belt require that the belt be subjected to external, dynamic loading as opposed to static and/or non-loaded applications. Moreover, in certain applications such as automobile timing and power transmission belts, V-belts and micro-ribbed belts, such belts are subjected to both high and low temperature extremes in dynamic loading conditions. In such situations, polyurethane elastomer belts have to date been unacceptable for long term usage due to their tendency to yield and/or crack under dynamic loading at both high and low temperatures. Thus, there remains a need for a polyurethane elastomeric belt that has excellent load carrying capability as well as the characteristics necessary to withstand dynamic loading under high and low temperature conditions, whether such belts are in the form of power transmission belts, V-belts or micro-ribbed belts.

Accordingly, it is one object of the present invention to provide an improved elastomeric belt.

It is another object of the present invention to provide a polyurethane belt having high and low temperature resistance properties when subjected to dynamic loading use.

It is a further object of the present to provide a RIM-formed endless belt having a long life with improved performance characteristics for use particularly in high temperature application, that is 135°C (275°F) and above, as well as in low temperatures of about -59°C (-75°F).

The present provides an endless power transmission belt capable of use in a co-operating sheave at 135°C (275°F), formed principally of an elastomeric polyurethane body portion, tensile means disposed in said body portion, and a sheave contact portion integral with said body portion characterised in that said polyurethane body portion , is formed from the reaction of a polyisocyanate with:
(i) an amine or hydroxy terminated polyol whose unsaturation level is less than 0.06 milliequivalents per gram polyol, and
(ii) an hydroxyl or amine terminated chain extender wherein said reaction comprises reacting said polyisocyanate with said polyol to form a prepolymer having an isocyanate content of 3 - 15 weight percent, followed by reacting said prepolymer with an additional amount of said polyol and said chain extender.

The present also provides a process for producing an endless power transmission belt capable of use in a co-operating sheave at 135°C (275°), the belt having an elastomeric polyurethane body portion, tensile member in the form of cord(s) disposed in said body portion , and a sheave contact portion integral with said body portion , the process comprising injecting a polyisocyanate-containing prepolymer and an active hydrogen-containing material into a mold defined by mold mandrel on whose surface the tensile member cord(s) are disposed, and a radially spaced outer mold shell, the space therebetween defining a mold cavity, including the steps of reacting the prepolymer and active hydrogen containing material to form belting with an elastomeric polyurethane body portion and the tensile member cord(s) disposed in said body portion, and removing such belting from the bold, characterised in that the prepolymer is the reaction product of the polyisocyanate with an amine or hydroxy terminated polyol whose unsaturation level is less than 0.06 milliequivalents per gram polyol, and has an isocyanate content from 3 to 15 weight percent; the active hydrogen-containing material is an hydroxyl or amine terminate chain extender admixed with additional quantity of said polyol; the prepolymer and chain extender are injected into the mold cavity by injection molding or reaction injection molding thereby to fill the mold cavity and the interstices between the tensile cord(s).

The accompanying drawings which are incorporated in and form a part of the specification illustrate preferred embodiments of the present invention, and together with a description, serve to explain the principles of the invention. In the drawings:
Fig. 1 is a perspective view, with parts in section, of a positive drive power transmission belt constructed in accordance with the present invention;
Fig. 2 is a perspective view, with parts in section, of a V-belt constructed in accordance with the present invention;
Fig. 3 is a perspective view, with parts in section, of a micro-ribbed belt constructed in accordance with the present invention;
Fig. 4 is a perspective view, with parts in section, of a mold designed to produce the belt illustrated in Fig. 1;
Fig. 5 is a graph illustrating the relationship between tensile strength and time thereby showing flex fatigue characteristics of several belts embodiments of the invention and one prior art belt construction.

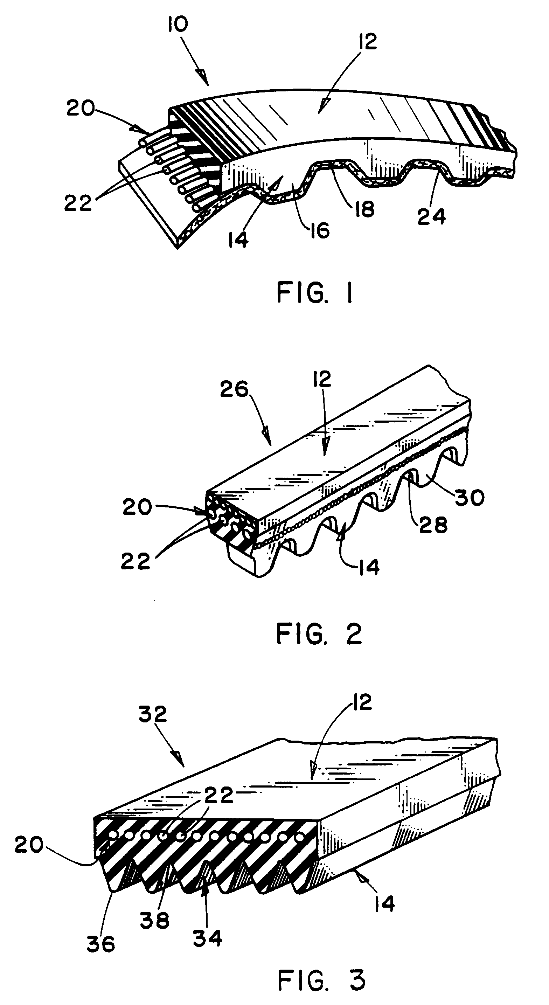

Referring to Fig. 1, a typical positive drive power transmission belt 10 is illustrated. The belt 10 includes an elastomeric main body portion 12 and a sheave contact portion 14 positioned along the inner-periphery of the main body portion 12. This particular sheave contact portion 14 is in the form of alternating teeth 16 and land portions 18. A tensile layer 20 is positioned within the main body portion 12 for providing support and strength to the belt 10. In the illustrated form, the tensile layer 20 is in the form of a plurality of cords 22 aligned longitudinally along the length of the main body portion 12. It should be understood, however, that any type of tensile layer 20 known to the art may be utilized. Moreover, any desired material may be used as the tensile member such as cotton, rayon, nylon, polyester, aramid, steel and even discontinuous fibers oriented for low carrying capability. In the preferred embodiment of Fig. 1, the tensile layer 20 is in the form of the illustrated cords 22 made from aramid fiber available under the trademark Kevlar. Other preferred cords include fiberglass and carbon filament for power transmission belts as in Fig 1, and polyester cords for V-belts as in Fig. 2 below.

A reinforcing fabric 24 may be utilized and intimately fits along the alternating teeth 16 and alternating land portions 18 of the belt 10 to form a face cover therefor. This fabric may be of any desired configuration such as a conventional weave consisting of warp and weft threads at any desired angle or may consist of warp threads held together by spaced pick cords of a knitted or braided configuration. More than one ply of fabric may be employed. If desired, the fabric 24 may be cut on a bias so that the strands form an angle with the direction of travel of the belt. Conventional fabrics may be employed using such materials as cotton, polyester, polyamide, hemp, jute, fiberglass and various other natural and synthetic fibers. In a preferred embodiment of the invention, the fabric layer 24 consists of an expansible wear-resistant fabric in which at least one of the warp or weft threads is made of nylon. In the preferred form, the fabric layer 24 is made from a nylon 66 stretch fabric.

Referring to Fig. 2, a state of the art or standard V-belt 26 is illustrated therein. The V-belt 26 includes an elastomeric body portion 12 similar to that of Fig. 1 and a tensile reinforcement member 20 in the form of cords 22, also similar to that as illustrated in Fig. 1. The elastomeric body 12 and the cords 22 of the V-belt 26 are constructed from the same materials as described above for Fig. 1.

The V-belt 26 also includes a sheave contact portion 14 as in the power transmission belt of Fig. 1. In this embodiment, however, the sheave contact portion 14 is in the form of alternating notch depression surfaces or troughs 28 and toothed projections 30. These alternating notched depression surfaces 28 and tooth projections 30 preferably follow a generally sinusoidal path as illustrated which serves to distribute and minimize bending stresses as the sheave contact portion 14 passes around pulleys and sheaves.

Referring to Fig. 3, a micro-ribbed belt 32 is illustrated. The micro-V belt 32 includes a main elastomeric body portion 12 as in the belts of Figs. 1 and 2 and also includes a tensile reinforcement member 20 preferably in the form of cords 22, also as previously described. The sheave contact portion 14 is in the form of a plurality of longitudinally aligned ribs 34 which include a plurality of raised areas or apexes 36 alternating by a plurality of trough areas 38 having oppositely facing sides which define driving surfaces of the belt 32. In each of these instances of Figs. 1-3, the sheave contact portion 14 is integral with the main body portion 12 and formed from the same elastomeric material to be described in greater detail below. While the present invention is illustrated with reference to the embodiments shown in Figs. 1-3 and particularly with reference to the positive power transmission belt illustrated in Fig. 1, it should be understood that the present invention is not to be limited to these particular embodiments or forms as illustrated but rather is applicable to any endless belt construction within the scope of the claims as defined below.

Several important factors of belt functionality include both high and low temperature resistance which pertain to heat aging of the belt, elasticity or stretchiness which pertain to flex age and temperature, and brittleness over heat age. There are two important aspects to high temperature dimensional stability of polyurethane belts. The first aspect is droop or sag of the belt when subjected to high temperature, and the second is permanent shrinkage or expansion of the belt's dimension as a result of exposure to either high or low temperatures when in use in a dynamic loading condition. With prior art belts, the predictability of such factors to elevated or lowered temperature extremes under dynamic loading became uncertain. The present invention, however, avoids such droop or sag and maintains modulus under dynamic loading operation when elevated to temperatures of 141°C (285° F) and more. In addition, the belts of the present invention are also able to perform quite well under low temperature situations including as low as about -59°C (-75° F).

The polyols, polyisocyanates and chain extenders useful in the present invention are as described in considerable detail in EP-A-0 517 908, published as WO92/12191. However, for purposes of necessary explanation, the polyols useful in the present invention include polyether polyols and polyester polyols. A preferred polyol includes an alkylene oxide such as propylene oxide, ethylene oxide or polytetramethylene oxide. The more preferred polyol is polypropylene oxide having a molecular weight range of approximately 5500-6000.

An important factor in the preferred elastomeric embodiment of the present invention involves the use of a polyol with a very low unsaturation level, that is the number of molecules with a single reactive site. The greater the unsaturation level, the greater the number of monofunctional species in the polyol. Thus, the lower the unsaturation level, the higher the functionality or number of reactive sites per molecule in the polyol. It was discovered during the course of development of the belt of the present invention that power transmission belts constructed from early developed RIM elastomers were cracking unexpectedly at elevated temperatures. It was then further discovered that by decreasing the unsaturation level, the premature cracking problem was alleviated. Tests of belts having unsaturation levels of 0.03-0.04 meq/g resulted in belt duration periods of 1157 and 1259 hours at 135°C (275° F) and 2335 hours at room temperature. However, belts having an unsaturation level of greater than 0.07 meq/g provided test duration periods of only 478 hours at 135°C (275° F) and 921 hours at room temperature before failure. Thus, the polyol unsaturation level is at least as low as 0.06 milliequivalent per gram sample and preferably less than 0.03 meq/g.

The polyisocyanate-containing composition may be composed entirely of a polyisocyanate or it may be a prepolymer mixture of polyisocyanate with a portion or all of the polyol. Use of a true polyisocyanate prepolymer (ie., about 15 weight percent NCO or less) in the present invention, however, has been found to be very important. Prior art RIM elastomers for nondynamic applications have generally used basic isocyanate elastomers (about 32 weight percent NCO or more) or quasi-prepolymers (about 16-25 weight percent NCO). However, the utility of such elastomers under dynamic load was unsatisfactory as discussed above.

A wide variety of polyisocyanates may be utilized to make the prepolymer in forming the elastomer material of the present invention. The preferred polyisocyanate is an aromatic polyisocyanate having two or more -NCO groups per molecule. While a wide variety of aromatic polyisocyanates may be useful as outlined in the referenced patent application, the preferred polyisocyanate is 4,4'-diphenyl methane diisocyanate (MDI). The preferred prepolymer is the reaction product of the polyisocyanate and the polyol such that there is at least a slight excess of the polyisocyanate. Whatever the aromatic polyisocyanate selected for use in the present invention, it is imperative that it be capable of rapid reaction time when admixed with a selected chain extender. In this manner, the combinations may be used in a RIM process wherein reaction time is approximately five seconds as opposed to a cast system which has a pot life of at least about five minutes.

Regardless of the specific selected polyisocyanate, the prepolymer preferably includes an isocyanate composition of 3-15 weight percent -NCO, and more preferably 7-12 weight percent -NCO. In addition, a preferred stoichiometric mixing ratio of polyisocyanate to polyol expressed as a reactive ratio of NCO/OH, is 0.90-1.20 and more preferably 1.01-1.03.

The chain extenders useful in the present invention are selected so as to be capable of rapid reaction time with the prepolymer. The chain extender may include a compound of aliphatic hydroxy compounds or may be an amine terminated compound, either aliphatic or aromatic. In one high temperature resistant embodiment of the invention, the chain extender may be either hydroxy or amine terminated. In another preferred embodiment of the invention, particularly wherein the belt of the invention is a result of reactive injection molding (RIM) processing as described in detail below, the preferred chain extender as an aromatic amine. In this more preferred form, the aromatic amine chain extender is 4,4'-methylenebis(orthochloroaniline), better known as MOCA or MBOCA.

In the preferred embodiment of the invention wherein the belt is formed through reactive injection molding, the chain extender preferably is the aromatic amine MOCA present in the amount of approximately 20-100 weight percent relative to the combined amount of chain extender and polyol. More preferably, this composition is selected so that MOCA is present in approximately 35-40 weight percent relative to the combined amount of the chain extender and polyol. In an alternate RIM reaction product embodiment, the isocyanate reacted polyol forms the A-side component of the RIM process so that the B-side component consists of 100% chain extender, preferably MOCA, relative to any polyol. In this manner, one can better control the rate of hard segment formation and subsequent phase separation in the elastomer, because the isocyanate in this instance is not involved in two competing reactions during the RIM injection as described below.

A more preferred form of the present invention is an elastomeric belt having an elastomeric composition wherein the polyol is 5500-6000 molecular weight polypropylene oxide, ethylene oxide capped, the chain extender is MOCA present in approximately 35-40 weight percent relative to the combination of MOCA and polyol, and the prepolymer comprises the reacted polyol with MDI resulting in 8-9% NCO.

Other added compounds may be useful as part of the elastomer composition in the belt of the present invention. These compounds include catalysts to decrease the reaction time of the components. The catalysts may be selected from any desirable compound known in the art and is preferably selected from organo-metal compounds, tertiary amines, and alkali metal alkoxides. However, the polyurea-urethanes can be prepared with or without catalysts. Those polyols which do not contain amine terminated groups are most typically prepared with a catalyst as described above. Suitable organo-metal compounds useful as catalysts include but are not necessarily limited to aliphatic soaps of tin, mercury, iron, zinc, bismuth, antimony, cobalt, maganese, vanadium and copper. Examples include organic ligands which are carboxylic acids of 2-20 carbons, such as dibutyl tin dilaurate, dimethyl tin dilaurate, phenylmercuric propionate and copper naphthenate. A particularly preferred catalyst with the composition of the present invention is bismuth neodecanoate. The metallic catalysts are believed to also help in retaining flexibility and resiliency of the belt of the present invention over heat age and flexing time. In this manner, the belt of the invention tends to retain its softness with heat age rather than become hard as in prior art rubber belts, and the metallic catalysts are believed to contribute to this property.

The present invention may also utilize various other additives in order to assist in the processing or functioning of a belt constructed in accordance with the present invention. For example, antioxidants are particularly useful when the elastomeric belt of the present invention is in the form of a power transmission belt. Suitable antioxidants include 2,6-di-t-butylphenol and polyalkylene glycol esters of hindered phenols of substituted alkanoic acids. Examples include 3-methyl-5-t-butyl-4-hydroxybenzoic acid ester of ethylene glycol, and bis{3-(3-methyl-5-t-butyl-4-hydroxyphenyl) propionate} of trimethylene glycol. The last example is a preferred product commercially available from Ciba-Geigy under the trade name Irganox 245.

Another additive to the belt elastomer composition includes a slip agent preferably in the form of a silicon lubricant, and in particular a polysiloxane. In the most preferred form, the polysiloxane has a 2000 molecular weight with 0.002 m²s⁻¹ (20 centistoke) viscosity, although a preferred molecular weight range is in the neighborhood of about 1,000-3,000 depending on the weight percent loading and viscosity as described below. The polysiloxane is useful in the present invention to reduce noise as the belt moves through sheaves. The advantage of the polysiloxane was found that it does not affect the urethane molecular structure of the belt elastomer in that it appears to preferentially occupy the void free volume in the soft segment of the urethane rather than interfering with the hard segment. Consequently, it does appear to have the unique ability to readily move through the elastomeric composition to the elastomer surface, and the degree of freedom of movement is dependent directly on the molecular weight and viscosity of the polysiloxane material.

At the surface of the belt, which is the interface of the sheave contact portion 14 and a sheave, the polysiloxane assists in decreasing the noise caused by movement of the belt through the sheave. If the molecular weight of the polysiloxane is too low, the molecules of the polysiloxane tend to diffuse out of the belt too quickly. This prematurely eliminates the anti-noise capability of the belt during its lifetime. On the other hand, if the molecular weight range is too high, the polysiloxane molecules are too large to readily migrate through the elastomer to its surface. Once the initial polysiloxane layer at the surface is depleted, then, the noise abatement capability of the polysiloxane throughout the remainder of the belt is reduced because of slow diffusion to the belt surface.

To determine the operating parameters of the slip agent in the present invention, a series of tests were performed. In the first test, a set of belts was made with commercially available polydimethylsiloxane (PDMS) additive at a one percent by weight level. The PDMS additive represented a wide range of molecular weights in this first test. Polyurethane belts were made identically in accordance with the invention except for the different molecular weight levels of the PDMS, and the different belts were then tested on both a 1987 Celebrity Serpentine drive and a Mercedes 190D engine for noise levels. Results of this first test are illustrated in Table I below.

**Table I**

| PDMS Molecular Weight | Noise Evaluation |
|---|---|
| 2,000 | *Quiet |
| 13,050 | Noisy after 2-3 hours |
| 139,000 | Noisy after 2-3 hours |

| | |
|---|---|
| *4092 hours on Celebrity and 750 hours on Mercedes - max. test runs | |

As can be seen from the data of Table I, the importance of selecting a polysiloxane additive with appropriate molecular weight is illustrated. As can be seen, the lower molecular weight provided a belt which was quiet throughout the length of the test, both 750 hours on the Mercedes engine as well as over 4,000 hours on the Chevy engine. However, when the molecular weight was substantially increased, the belts became noisy in a relatively short period of time. It is believed that the higher molecular weight polysiloxanes defuse through the soft segment so slowly that they cannot effectively function as a lubricant so that the belt becomes noisy after a short period of time, once the lubricant on the surface of the belt is used up. However, the 2,000 molecular weight PDMS at the one percent by weight level apparently had a proper molecular weight such that the siloxane could defuse to the belt surface at the correct rate to continuously act as a lubricant at the surface to reduce noise of the belt.

As can be seen from Table I, molecular weights as low as 13050 did not prevent belt noise for more than a few hours. To further define a narrow range of preferred PDMS molecular weights which would work as well as a 2,000 molecular weight PDMS, commercially available siloxanes were selected ranging from 1200 molecular weight to 13650 molecular weight and incorporated into belts as with the tests for Table I. The results of this set of slip agent experiments is indicated in Table II below.

**Table II**

| Belt Number | PDMS Molecular Weight | PDMS Viscosity (centistokes) | Onset of Noise(hrs) |
|---|---|---|---|
| Belt 1 | 1250 | 10 | <144 |
| Belt 2 | 2000 | 20 | >750 |
| Belt 3 | 3780 | 50 | <24 |
| Belt 10 | 1650 (branched) | 50 | <24 |
| Belt 4 | 5970 | 100 | <24 |
| Belt 5 | 9430 | 200 | <24 |
| Belt 6 | 13650 | 350 | <24 |
| 1 centistoke = 10⁻⁴ m²s⁻¹ | | | |

Included in Table II is the corresponding viscosity of the various molecular weight PDMS liquids. Belt 10 incorporated a branched siloxane for a comparison with unbranched species having the same viscosity, that of 0.005 m²s⁻¹ (50 centistokes). The test results indicated in the last column of Table II were based on polyurethane belts tested for noise on the Mercedes engine when they are run continuously at an idling speed of approximately 750 rpm.

As previously stated, a control belt with no siloxane becomes extremely noisy within about three hours on the Mercedes engine. Belts with the 1% by weight level of the 2000 molecular weight PDMS (Belt 2) have been run up to 750 hours with no belt noise. As indicated from Table II, all the belts with PDMS molecular weight higher than the 2000 molecular weight at 1% by weight loading became noisy within 24 hours. The one belt that was formulated with the lower molecular weight PDMS at a 1% weight level (Belt 1) was quiet for about 144 hours and then started chirping. This lower molecular weight additive is believed to defuse through the soft segment too rapidly and depleted quickly at the 1% by weight loading in this time frame. Belt 10, made with the branched PDMS, shows that the slip agent additive functions primarily according to its viscosity, rather than its molecular weight. The example above with a 0.005 m²s⁻¹ (50 centistoke) viscosity and 1650 molecular weight (Belt 10) reduced noise for less than 24 hours as did the straight chain 0.005 m²s⁻¹ (50 centistoke) PDMS (Belt 3). A straight chain 1650 molecular weight should reduce noise quite effectively since it would fall between the 1250 and 2000 molecular weight materials, both of which reduced noise much longer than 24 hours. Thus, it is believed that viscosity is the principal functioning parameter.

Table III below shows noise results with several PDMS additives in equivalent molecular loading, that is the PDMS additives were loaded to give the same molar equivalent as the 2000 molecular weight additive at the 1% by weight loading.

**Table III**

| Belt Number | PDMS Molecular Weight | PDMS Viscosity (centistokes) | Onset of Noise(hrs) |
|---|---|---|---|
| Belt 2 | 2000 | 20 | >750 |
| Belt 7 | 3780 | 50 | <48 |
| Belt 8 | 5970 | 100 | <56 |
| Belt 9 | 13650 | 350 | <36 |
| 1 centistoke = 10⁻⁴ m²s⁻¹ | | | |

As can be seen from Table III, the belts with molecular weights higher than 2000 are quieter longer than the corresponding belts at a 1% by weight loading as shown in Table II. This is believed to be due to progressively more siloxane in the formulation as molecular weight increases for an equivalent molar loading. Again, however, as in the 1% by weight loading illustrated in Table II, these higher molecular weight PDMS materials do not readily apparently migrate through the soft segment to replenish the belt surface for noise reduction, and thus do not show noise reduction at significant hour levels as does Belt 2.

Additional tests were made with the 2000 molecular weight PDMS additive due to the significant noise reduction levels achieved. These tests related to the tensile and tear properties of hand cast plaques made with and without the 2000 molecular weight PDMS additive at a one percent weight loading. When standard deviations were considered in these tests, this slip agent additive did not appear to have any detrimental effect on tensile and tear properties of the polyurethane material. Moreover, Taber abrasion tests were performed on the polyurethane materials, and the results indicated that the addition of the PDMS 2000 molecular weight additives of 1% by weight significantly improved the abrasion resistance of the polyurethane material. Finally, tests were performed on the polyurethane material with the 2000 molecular weight PDMS additive at 1% by weight using a Rheometrics Dynamic Spectrometer, and it was determined that the addition of PDMS additive had virtually no effect on the viscoelastic properties of the polyurethane material.

In preparing the elastomer belt of the present invention, any known molding process may be utilized including casting, injection molding and reaction injection molding. In the preferred form, RIM is utilized, and the elastomer belt of the invention is the RIM reaction product as now discussed in detail below. In this preferred RIM embodiment, two fluid input streams are formed. The A-side component stream includes the polyisocyanate-containing prepolymer, while the B-side component includes the chain extender, excess polyol, if any, and other miscellaneous additives such as catalyst, slip agents, antioxidants and colors. The A-side may include just the polyisocyanate selected as discussed above, or it may include a prereacted polyisocyanate prepolymer with a percentage of the polyol up to and including 100% of the polyol utilized in the elastomeric composition with or without an excess of -NCO. The B-side component, as described above, includes the remaining excess polyol unless 100% of the polyol is admixed in the A-side prepolymer. As indicated, the A-side isocyanate-containing prepolymer is prereacted at appropriate temperatures to form the A-side fluid stream component.

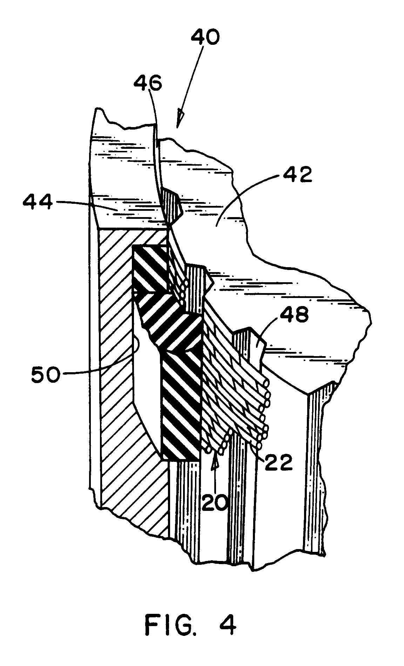

Referring now to Fig. 4, a typical mold 40 is illustrated for purposes of explaining the reaction injection process of forming the belt of the present invention. Mold 40 consists of an inner mandrel 42 and an outer shell 44 having a spaced area 46 therebetween. Notches 48 are formed in the inner mandrel 42, and a recessed portion 50 is formed in the outer shell 44. The tensile layer 20 in the form of Kevlar cords 22 are wound around the outer surface of the inner mandrel 42. Once the cords 22 are placed in position, the outer shell 44 is positioned about the inner mandrel 42 and readied for belt formation.

Once the A-side and B-side constituent streams are formed as described above, they are injected through a RIM mixhead (not illustrated) into the mold 40 into the space 46 between the inner mandrel 42 and the outer shell 44. The mixhead is designed to mix A and B-side components together and simultaneously inject them into the mold 40 thereby reacting the A and B-side components during injection typical of RIM processes. The A and B mixed composition is injected into the mold 40 to produce the desired shape of belt, in this instance a power transmission belt as illustrated in Fig. 1. As can be seen from Fig. 4, the injected elastomer fills the recessed area 50 to form the main body portion 12, the notches 48 to form the teeth 16, and the interstices between the cords 22. The injected mixed composition is then allowed to gel and solidify in the mold 40 at which time it is demolded and permitted to postcure separate from the mold.

The processing temperatures of both the A and B side will generally range from 40-120°C and preferably 65-75°C. The gel time of the material in the mold will vary depending on the constituent components thereof. The gel time will generally be between 0-15 minutes. More particularly, when a catalyst is not utilized, a hard gel will generally take place in about 1½-2 minutes or, if activated amines are used, in about 15 seconds. When a catalyst is utilized, a soft gel is initially obtained followed by vitrification in approximately ½ - 2½ minutes. The demold time will generally range from 1-60 minutes with a postcure time of from 0-24 hours at about 93-232°C (200-450° F). These ranges, of course, will depend upon the actual selection of she polyisocyanate, chain extender and polyol combinations. It should be noted that the A and B side component reactants are injected typically at rates of approximately 100-800 grams per second into the mold.

The resultant elastomeric portion of the belt of the present invention is a combination of hard and soft segments created by the reacted constituents as described above. Important aspects of the present invention are that the hard segment average length is fairly uniform and that the hard segments are closely packed with each other. Therefore, the elastomeric composition of the present invention has better flex fatigue characteristics and tends to be more resistant to cracking than prior art materials. Moreover, the ethylene oxide groups on the ends of the polyol assist in phase segregation of the hard and soft segments. As a result, the elastomeric belt of the present invention retains flexibility and resiliency over heat age during use rather than hardening as in prior art rubber compositions, which tend to thermoset or crystallize depending on the nature of the composition. This feature is also enhanced in part due to use of metallic catalysts as discussed previously above.

A significant advantage of the present invention is in combined high and low temperature applications and thus provides the elastomeric belt of the present invention with high and low temperature resistance. The present invention is particularly useful in dynamic applications when loads are applied in high temperature environments, which applications would tend to cause either cracking or melting of prior art compositions. Examples of environments subjected to such conditions and for which the present invention is highly useful include power transmission synchronous timing belts for automobile engines. The present invention also has excellent load carrying capability with a long heat age and flex life.

The present invention also has good low temperature resistance as well. This is believed to be due to the low glass transition temperature of the propylene oxide polyols as well as improved phase segregation in the belt elastomer.

A variety of tests have been performed comparing the various performance characteristics and properties of the belt of the present invention with belts of prior construction using state of the art technology. In general, the belt of the present invention tends to get softer with heat aging rather than harder as compared to rubber belts, which increase in crosslink density resulting in higher modulus with heat age.

Several characteristics have been reviewed and compared including elasticity, tension loss, creep, compression set, temperature resistance, flex fatigue, hysteresis, oil and water resistance, and heat aging. For purposes of the test results discussed below, the following belt terminology is defined. The X belt is in fact a preferred embodiment of the present invention and includes a power transmission belt having Kevlar cords as tensile members. It was made by reaction injection molding of A and B components to provide an elastomer composition having 8% NCO content from the isocyanate MDI, and a 60/40 weight percent ratio of a polypropylene polyol to a MOCA chain extender. The Y belt is also an embodiment of the present invention in the form of a power transmission belt and includes a Kevlar cord structure with an elastomer formed by the RIM injection molding of an A-side component having a prepolymer consisting of polypropylene oxide admixed with MDI to result in an 8 weight percent NCO content, and a B component consisting of the chain extender 1,4-butylene glycol.

The prior art power transmission belts against which the X and Y belts as described above were tested included a belt designated I. This was an Adiprene-based elastomeric composition, Adiprene being a trademark of the E.I. Du Pont de Nemours Company for a polyurethane elastomer which is a reaction product of diisocyanante and polyalkylene ether glycol. Another prior art belt utilized included neoprene, which is a polychloroprene rubber, as the elastomer. This belt was designated as II. Yet another state of the art belt is one that carries the designation III, which is a hydrogenated nitrile rubber elastomeric material common to the rubber belt and hose industry.

### Example I.

Compression set tests were performed on the elastomer material for the X belt and compared to that of the III belt. The data from this test is summarized in Table IV and shows the results of these compression tests at both 10% and 25% compression levels. From the table, it is clear that temperature dependence of the compression set in values is relatively linear between temperature and compression set for the III belt. On the other hand, the X belt polyurethane has a better or lower set value than the III belt at lower temperatures, but at higher temperatures the X polyurethane takes a complete compression set. Based on this information alone, one would not normally conclude that the X belt composition would be a particularly good composition for use in a belt in high temperature environments. However, the surprising result is that the belt performs exceptionally well in high temperature environments under dynamic loading as discussed above and as clearly indicated by the additional test results provided below.

**Table IV**

| | X | | III | |
|---|---|---|---|---|
| | 10% | 25% | 10% | 25% |
| 70 hrs, 70°C (158°F) | 20% | 19% | 26% | 23% |
| 70 hrs, 85°C (185°F) | 30% | 29% | 40% | 35% |
| 70 hrs, 100°C (212°F) | 64% | 56% | 53% | 47% |
| 70 hrs, 121°C (250°F) | 127% | 107% | 68% | 63% |
| 70 hrs, 121°C (250°F) | | 111% | | 68% |
| 70 hrs, 135°C (275°F) | | 111% | | 72% |

### Example II.

In this particular test program, the X belt of the present invention was tested against several reference belts, including the II neoprene belt, the III belt, both soft and hard, and another belt designated as IV which is a chlorosulfonated polyethylene synthetic rubber available under the trademark Hypalon from the E.I. Du Pont de Nemours Company. In all of these tests of this Example II, the belts were constructed as 97 tooth belts, 25.4 mm (one inch) wide, and were tested by being placed on a dead weight pulley applying 68 kg (150 lbs.) dead weight. The belts were then heated to about 125°C (257° F) and observed for the appearance of the first small crack as well as cracks across the back rubber and fabric cracks. In these tests, the neoprene II belt was the first to fail in the sense of having cracks appear, and it lasted only slightly longer than 100 hours at temperature. The III belts lasted from 2.2 to four times as long as the neoprene II control belt. The IV belt with the Hypalon elastomer provided, on the average, about three times the heat resistance of the II control belt by lasting about three times as long. Finally, the X belt had a significantly better heat resistance than any of the other elastomer constructions illustrated in this Example II. The X belts tested lasted on the average of over 690 hours, or about 6.6 times the II control belt. Another observation of this particular test was that the brittleness of all the rubber belts increased with heat age time except for the X belt, which retained its flexibility or resiliency and in fact even softened slightly with time. This feature is discussed in more detail above and was in fact observed during this testing operation.

### Example III.

A series of property characteristic tests were run on the X, II, III and IV belts. In the load capacity or carrying tests, it was determined that the X elastomeric compound had three times the static modulus of any of the other elastomeric materials tested and four times the dynamic modulus. The II compound was definitely the softest material, while the X belt clearly had the highest load carrying capability. As in the previous Example I, all the belt compounds tested showed a high compression set, and the X belt compound had a total set above 125°C (257° F). The modulus properties of the III compound showed the least temperature sensitivity while the X compound was also surprisingly good.

In addition, the X urethane composition had the highest hysteresis resistance of all those compositions tested, while the II belt provided the worst resistance. However, the X belt hysteresis was lower than the rubber belts at high temperatures of 135-149°C (275-300° F). Finally, X belt tensile strength was about the same as the rubber belts at room temperature but was considerably better with heat age.

The X belt urethane composition had a very good oil resistance and a superior water resistance. The III belt had the best oil resistance while the IV belt had the worst oil resistance. Moreover, the III belt composition had very good water resistance while the IV belt material had very poor water resistance.

Low temperature properties were also tested. In this instance, cold crank tests indicated that the X belt composition had outstanding low temperature properties, and in particular showed a low temperature resistance of lower than -51°C (-60° F). The rubber belts tested at a low temperature resistance of about -34 to -37°C (-30 to -35° F). Moreover, low temperature properties after heat aging were good for all the compounds, but were best for the X belt.

In addition, flex fatigue was tested. The high compound modulus of the X belt urethane composition provided a relatively poor flex fatigue result in this test, while the II and III belt material showed moderate flex fatigue resistance. The IV belt provided the best flex fatigue resistance in this particular test program.

Belt material testing indicated that the X belt had a lower fabric peak adhesion than the III belt while the land adhesion was comparable to the III belt. However, cord adhesion was much higher for the X belt than the rubber III belt, although cord adhesion was reduced by exposure to oil and water. In addition, the tooth shear for the X belt was almost half that of the rubber III belt.

Finally, the heat aging tests of this particular example showed that the neoprene II belt had a very limited life at 121°C (250° F). Specifically, it had a maximum lifetime of 14 days at which point it failed. At the opposite end of this result, the X belt composition provided excellent property retention at 135°C (275° F), and was far better than any of the other compositions tested in this Example III.

### Example IV.

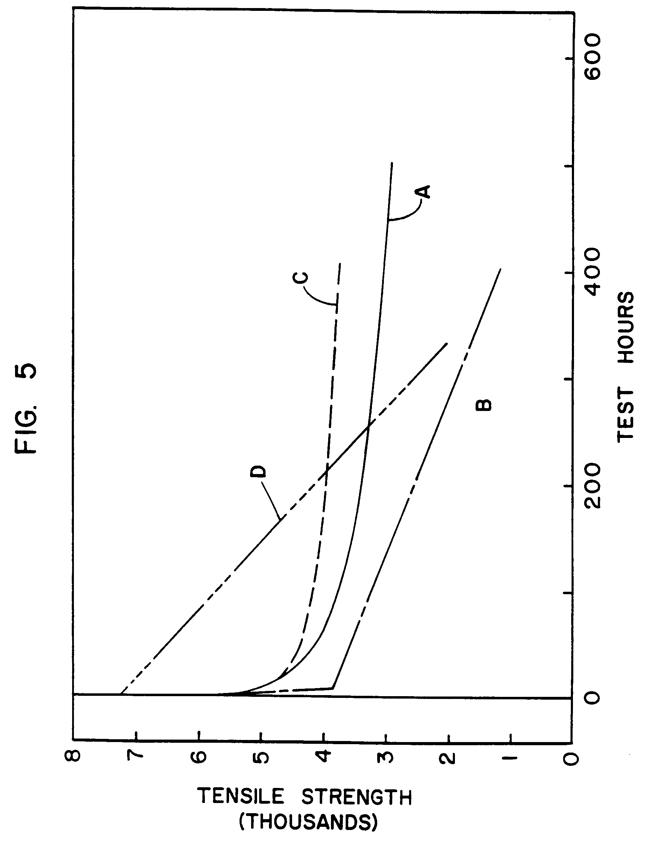

In this testing program, a variety of belt compositions with different tensile member materials were constructed in accordance with the present invention and tested against each other and against a rubber belt. This particular test was performed to determine tensile strength over time, or tensile member flex fatigue. In this particular example, and with reference to Table V and Fig. 5, A is the X belt with a Kevlar cord tensile member, B is the Y belt with a 1425 ply cord, C is a modification of the X belt utilizing a lighter weight Kevlar cord and an 80/20 ratio of polyol to chain extender, and D is the III belt with a fiberglass cord. This particular tensile strength test was run at 125°C (257° F), and each of the test belts was pulled apart longitudinally after running the indicated time period (see Table V) to determine the tensile strength of that belt at that particular point in time. As can be seen from Table V and Fig. 5, the tensile strength of the rubber III prior art belt decreases rapidly and continuously over time at the elevated temperature. The Y belt tensile strength decreases with time, but at a substantially less rapid rate than the III belt. Both the X belt and the 80/20 modified X belt, A and C respectively, initially decrease in tensile strength and then level out at a fairly consistent tensile strength over at least 500 hours of the test. Thus, it can be seen that the belt construction of the present invention including the selected tensile member will maintain a relatively consistent tensile strength over time while being operated under dynamic load conditions at elevated temperatures.

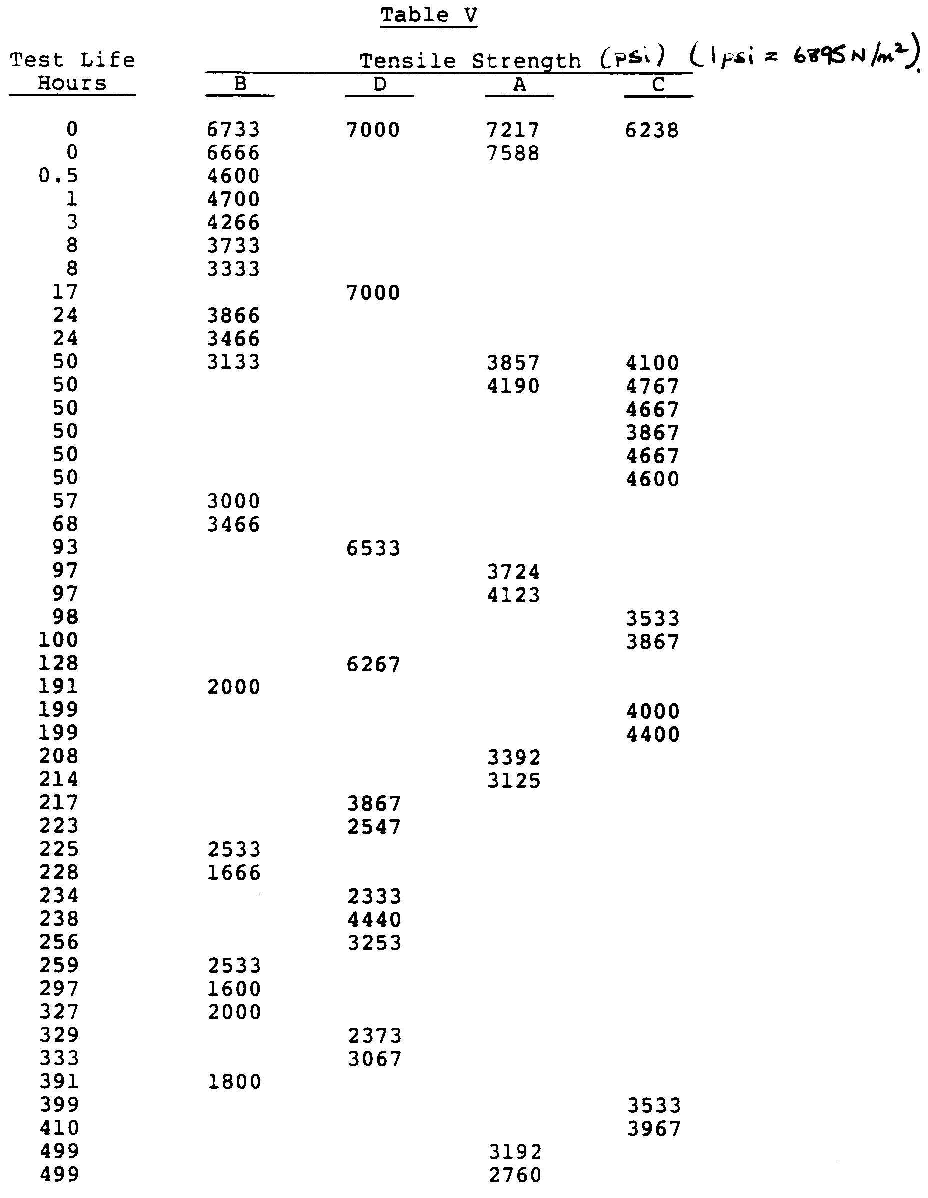

### Example V.

In this particular test, belts were tested to failure at various different temperatures. The belts tested were the X belt, the Y belt, and the I belt. All three of these belts were subjected to a loaded horsepower test, wherein each belt was placed on two sprockets, each of the sprockets being 19 tooth, with a 51 mm (two inch) back side idler. The belts that were tested were 19 mm (3/4 inches) in width and were operated at 3200 rpm during all temperatures. 1.08 m kg (94 inch lbs.) of torque or tension were applied during the test, and the test had generated approximately 3.7 kW (five horse power) to simulate the power requirement of an overhead camshaft drive in an automobile engine.

These three belts were tested to failure at room temperature, 116°C (240° F) and 135°C (275° F). At the room temperature test, none of the belts failed after over 6,000 hours of operation. This is also the case at the medium temperature 116°C (240° F) test. However, at the high temperature, or 135°C (275° F), the X belts continued operation at over 5700 hours, while both the I and Y belts failed. More specifically, at 135°C (275° F), it was discovered that the I belt ran approximately twice as long to failure as compared to the Y belt. However, the X belt ran more than six times as long as the Y belt and more than three times as long as the I belt, and was still in operation at the time of preparing and filing of this application. Thus, it is clear that the belt constructed in accordance with the present invention has high lifetime properties over a wide variety of temperature ranges from room temperature all the way to high temperature environments.

### Example VI.

In another set of tests comparing the X belt at two different widths to the III rubber belt, also at two different widths. These four belts were run at 132°C (270° F) until failure. Both X belts lasted longer than either rubber III belts. In fact, even the 16 mm (5/8") X belt lasted over 10% longer than a 25.4 mm (1") width rubber belt. Clearly, the X belt of the present invention has a substantially longer life in high temperature environments than counterpart rubber belts.

### Example VII.

In this example, the inertia load capability of several belts were tested and compared over time. In this test the X belt and an 80/20 soft version of the X belt (designated Xl) were tested and compared to two different II belts (IIA and IIB), a III belt, and a IV belt. In each instance, the tested belt was in the form of a 97 tooth belt, 19 mm (3/4 in.) wide with similar tooth profile. Each belt was oscillated through about 1 radian on a pulley with an installation tension of 266.9 newtons. Both the X and Xl belts had substantially greater inertia load capability as compared to the IIA, IIB, III and IV belts over the same test life.

As can be seen from the above, the present invention provides an improved elastomeric belt construction. This elastomeric belt is preferably manufactured utilizing reaction injection molding technologies so as to provide for short mold times and rapid cure rates thereby substantially increasing the production capacity. However, casting and injection molding techniques and spin casting may also be utilized. Moreover, the elastomeric belt of the present invention has particularly enhanced characteristics so as to retain its shape and strength under continuous dynamic loading conditions as well as resisting degradation and stretching under both high and low temperature conditions. Moreover, because of the nature of this belt composition, the belt of the present invention can be reaction injection molded at high pressure and material velocity without moving cord and fabric within the mold thus providing high production economies of the RIM process while simultaneously exhibiting the desirable characteristics as described above. As a result, the belt construction of the present invention is useful in a wide variety of belt applications including use in synchronous timing and power transmission belts for automobile engines subjected to unusually high temperatures of today's automobiles as well as V-belts, flat industrial belts and other belt applications.

The foregoing description and the illustrative embodiments of the present invention have been described in detail in varying modifications and alternate embodiments. It should be understood, however, that the foregoing description of the invention is exemplary only, and that the scope of the invention is limited only by the claims as interpreted in view of the description.

## Claims

1. An endless power transmission belt (10) capable of use in a co-operating sheave at 135°C (275°F), formed principally of an elastomeric polyurethane body portion (12), tensile means (20) disposed in said body portion, and a sheave contact portion (14) integral with said body portion (12), characterised in that said polyurethane body portion (12) is formed from the reaction of a polyisocyanate with: (i) an amine or hydroxy terminated polyol whose unsaturation level is less than 0.06 milliequivalents per gram polyol, and (ii) an hydroxyl or amine terminated chain extender, wherein said reaction comprises reacting said polyisocyanate with said polyol to form a prepolymer having an isocyanate content of 3-15 weight percent, followed by reacting said prepolymer with an additional amount of said polyol and said chain extender.

2. The belt as claimed in claim 1, wherein said polyurethane has a hard segment and a soft segment that is formed by an A-side component comprising said polyisocyanate-containing prepolymer and a B-side component comprising said polyol and said chain extender, and said polyurethane has a NCO/OH index ratio between 0.09-1.20.

3. The belt as claimed in claim 1, wherein said elastomeric body portion further comprises a polysiloxane additive to control the coefficient of friction of said belt while in operation, and wherein the polysiloxane has an effective viscosity to provide a rate of migration through the belt to the sheave contact portion (14) to suppress belt noise during operation of the belt (10).

4. The belt as claimed in claim 1, wherein said polyol unsaturation level is less than 0.03 milliequivalents per gram polyol.

5. The belt as claimed in claim 1, wherein said polyurethane body portion (12) is formed from the reaction injection molding of an A-side component comprising said prepolymer incorporating a substantial portion of said polyol, and a B-side component comprising said chain extender.

6. The belt as claimed in claim 1, selected from a V-belt, positive drive belt and a micro-ribbed belt.

7. A process for producing an endless power transmission belt (10) capable of use in a co-operating sheave at 135°C (275°F), the belt having an elastomeric polyurethane body portion (12), tensile member (20) in the form of cord(s) disposed in said body portion (12), and a sheave contact portion (14) integral with said body portion (12), the process comprising injecting a polyisocyanate-containing prepolymer and an active hydrogen-containing material into a mold (40) defined by a mold mandrel (42) on whose surface the tensile member (20) cord(s) are disposed, and a radially spaced outer mold shell (44), the space therebetween defining a mold cavity, including the steps of reacting the prepolymer and active hydrogen-containing material to form belting with an elastomeric polyurethane body portion and the tensile member cord(s) disposed in said body portion, and removing such belting from the bold, characterised in that the prepolymer is the reaction product of the polyisocyanate with an amine or hydroxy terminated polyol whose unsaturation level is less than 0.06 milliequivalents per gram polyol, and has an isocyanate content from 3 to 15 weight percent; the active hydrogen-containing material is an hydroxyl or amine terminate chain extender admixed with additional quantity of said polyol; the prepolymer and chain extender are injected into the mold cavity by injection molding or reaction injection molding thereby to fill the mold cavity and the interstices between the tensile cord(s).

8. The process of claim 7, wherein the polyol is polypropylene oxide polyol.

9. The process of claim 8, wherein the chain extender is 4,4'-methylenebis (orthochloroaniline).

10. The process of claim 9, wherein the chain extender is present in the amount of 20-40 weight percent relative to the combined amount of chain extender and polyol.

11. The process of claim 7, wherein the polyol unsaturation level is less than 0.03 milliequivalents per gram of polyol.

12. The process of claim 7, wherein the prepolymer has an isocyanate content from 7-12 weight percent.

13. The process of claim 7, wherein the polyurethane body portion of the belt has a hard segment and a soft segment that is formed by the reaction injection molding of an A-side component comprising said prepolymer and a B-side component comprising said polyol and said chain extender.

14. The process of claim 7, wherein the chain extender is 1,4-butylene glycol.

## Patentansprüche

1. Endloser Kraftübertragungsriemen (10), der zur Verwendung in einer zusammenwirkenden Scheibe bei 135°C (275°F) geeignet ist und der hauptsächlich aus einem elastomeren Polyurethan-Körperteil (12), einer in dem Körperteil angeordneten Zugeinrichtung (20) und einem einstückig mit dem Körperteil (12) ausgebildeten Scheibenkontaktbereich (14) besteht, dadurch gekennzeichnet, daß der Polyurethan-Körperbereich (12) aus der Reaktion eines Polyisocyanats mit: (i) einem Polyol mit einer Amino- oder Hydroxyl-Gruppe am Kettenende, dessen Nichtsättigungsgrad weniger als 0,06 Milliäquivalente pro Gramm Polyol beträgt, und (ii) einem Kettenverlängerer mit einer Hydroxyl- oder Amino-Gruppe am Kettenende gebildet ist, wobei die Reaktion das Umsetzen des Polyisocyanats mit dem Polyol zur Bildung eines Präpolymers mit einem Isocyanat-Gehalt von 3-15 Gewichtsprozent und das anschließende Umsetzen des Präpolymers mit einer zusätzlichen Menge des Polyols und des Kettenverlängerers beinhaltet.

2. Riemen nach Anspruch 1, bei dem das Polyurethan ein hartes Segment und ein weiches Segment aufweist, das durch eine das Polyisocyanat enthaltende Präpolymer aufweisende A-Seiten-Komponente und eine das Polyol und den Kettenverlängerer aufweisende B-Seiten-Komponente gebildet ist, und das Polyurethan ein NCO/OH-Indexverhältnis zwischen 0,09 - 1,20 aufweist.

3. Riemen nach Anspruch 1, bei dem das elastomere Körperteil ferner ein Polysiloxan-Additiv zum Regeln des Reibungskoeffizienten des Riemens während des Betriebs aufweist, und bei dem das Polysiloxan eine effektive Viskosität aufweist, die eine Wanderungsrate durch den Riemen zum Scheibenkontaktbereich (14) bewirkt, die während des Betriebs des Riemens (10) Riemengeräusche unterdrückt.

4. Riemen nach Anspruch 1, bei dem der Polyol-Nichtsättigungsgrad geringer als 0,03 Milliäquivalente pro Gramm Polyol beträgt.

5. Riemen nach Anspruch 1, bei dem das Polyurethan-Körperteil (12) durch denk Reaktionsspritzguß einer A-Seiten-Komponente, die das einen erheblichen Teil des Polyols enthaltende Präpolymer aufweist, und einer den Kettenverlängerer aufweisenden B-Seiten-Komponente gebildet ist.

6. Riemen nach Anspruch 1, ausgewählt unter Keilriemen, kraftschlüssigen Treibriemen und Mikrorippenriemen.

7. Verfahren zur Herstellung eines endlosen Kraftübertragungsriemens (10), der zur Verwendung in einer zusammenwirkenden Scheibe bei 135°C (275°F) geeignet ist, wobei der Riemen ein elastomeres Polyurethan-Körperteil (12), ein in dem Körperteil angeordnetes Zugelement (20) in Form von Cord(s) und einen einstückig mit dem Körperteil (12) ausgebildeten Scheibenkontaktbereich (14) aufweist, wobei das Verfahren das Injizieren eines Polyisocyanat enthaltenden Präpolymers und eines aktiven Wasserstoff enthaltenden Präpolymers in eine Form (40), die durch einen Formeinsatz (42), auf dessen Oberfläche das/die Zugelement-Cord(s) (20) angeordnet sind, und eine radial beabstandete äußere Formschale (44) gebildet ist, wobei der Raum zwischen diesen einen Formhohlraum bildet, umfaßt, mit den Schritten des Umsetzens des Präpolymers mit dem aktiven Wasserstoff enthaltenden Material zur Bildung eines Riemens mit einem elastomeren Polyurethan-Körperteil und dem/den in dem Körperteil angeordneten Zugelement-Cord(s) und des Entfernens des Riemens aus der Form, dadurch gekennzeichnet, daß das Präpolymer das Reaktionsprodukt des Polyisocyanats mit einem Polyol ist, das eine Amino- oder Hydroxyl-Gruppe am Kettenende aufweist und dessen Nichtsättigungsgrad weniger als 0,06 Milliäquivalente pro Gramm Polyol beträgt, und einen Isocyanat-Gehalt von 3 bis 15 Gewichtsprozent aufweist; das aktiven Wasserstoff enthaltende Material ein Kettenverlängerer mit einer Hydroxyl-oder Amino-Gruppe am Kettenende ist, dem eine zusätzliche Menge des Polyols beigemischt ist; das Präpolymer und der Kettenverlängerer in den Formhohlraum durch Spritzgießen oder Reaktionsspritzgießen injiziert werden, um so den Formhohlraum und die Zwischenräume zwischen dem/den Cord(s) zu füllen.

8. Verfahren nach Anspruch 7, bei dem das Polyol Polypropylenoxyd-Polyol ist.

9. Verfahren nach Anspruch 8, bei dem der Kettenverlängerer 4,4'-Methylenbis(orthochloranilin) ist.

10. Verfahren nach Anspruch 9, bei dem der Kettenverlängerer in einer Menge von 20-40 Gewichtsprozent relativ zur kombinierten Menge des Kettenverlängerers und des Polyols vorhanden ist.

11. Verfahren nach Anspruch 7, bei dem der Polyol-Nichtsättigungsgrad geringer als 0,03 Milliäquivalente pro Gramm Polyol ist.

12. Verfahren nach Anspruch 7, bei dem das Präpolymer einen Isocyanat-Gehalt von 7-12 Gewichtsprozent aufweist.

13. Verfahren nach Anspruch 7, bei dem das Polyurethan-Körperteil ein hartes Segment und ein weiches Segment aufweist, das durch den Reaktionsspritzguß einer das Präpolymer aufweisenden A-Seiten-Komponente und einer das Polyol und den Kettenverlängerer aufweisenden B-Seiten-Komponente gebildet ist.

14. Verfahren nach Anspruch 7, bei dem der Kettenverlängerer 1,4-Butylenglycol ist.

## Revendications

1. Courroie de transmission sans fin (10) pouvant être utilisée dans une poulie adaptée fonctionnant à 135°C (275°F), formée principalement d'un corps en polyuréthanne élastomère (12), d'un moyen de traction (20) incorporé à ce corps, et d'une portion de contact de poulie (14) faisant partie intégrante avec ledit corps (12), caractérisée en ce que le corps en polyuréthanne (12) est formé par réaction d'un polyisocyanate avec : (i) un polyol à terminaison amine ou hydroxy dont le degré d'insaturation est inférieur à 0,06 milliéquivalent par gramme de polyol et (ii) un agent d'allongement de chaîne à terminaison hydroxyle ou amine, ladite réaction comprenant la réaction dudit polyisocyanate avec ledit polyol pour former un prépolymère ayant une teneur en isocyanate de 3 à 15 pour cent en poids, suivie par la réaction dudit prépolymère avec une quantité supplémentaire dudit polyol et ledit agent d'allongement de chaîne.

2. Courroie suivant la revendication 1, dans laquelle le polyuréthanne comporte un segment dur et un segment mou qui est formé par un constituant, du côté A, comprenant le prépolymère contenant un polyisocyanate et un constituant, du côté B, comprenant le polyol et l'agent d'allongement de chaîne, et ledit polyuréthanne a un indice NCO/OH égal à un rapport entre 0,09 et 1,20.

3. Courroie suivant la revendication 1, dans laquelle le corps élastomère comprend en outre un additif consistant en un polysiloxanne pour ajuster le coefficient de frottement de ladite courroie lors de son fonctionnement, et dans laquelle le polysiloxanne a une viscosité efficace pour parvenir à une vitesse de migration à travers la courroie jusqu'à la portion de contact de poulie (14) afin de supprimer le bruit de la courroie au cours du fonctionnement de cette courroie (10).

4. Courroie suivant la revendication 1, dans laquelle le degré d'insaturation du polyol est inférieur à 0,03 milliéquivalent par gramme de polyol.

5. Courroie suivant la revendication 1, dans laquelle le corps en polyuréthanne (12) est formé par moulage par injection-réaction d'un constituant du côté A comprenant le prépolymère renfermant une portion importante du polyol, et d'un constituant du côté a comprenant l'agent d'allongement de chaîne.

6. Courroie suivant la revendication 1, choisie entre une courroie en V, une courroie à entraînement direct et une courroie micronervurée.

7. Procédé de production d'une courroie de transmission sans fin (10) pouvant être utilisée dans une poulie adaptée fonctionnant à 135°C (275°F), courroie comprenant un corps en polyuréthanne élastomère (12), un élément de traction (20) sous forme d'un ou plusieurs câbles incorporés audit corps (12), et une portion de contact de poulie (14) faisant partie intégrante dudit corps (12), procédé comprenant l'injection d'un prépolymère contenant un polyisocyanate et d'une matière contenant de l'hydrogène actif dans un moule (40) défini par un mandrin de moule (42) sur la surface duquel sont placés le ou les câbles de l'élément de traction (20), et une enveloppe extérieure espacée (44) du moule, l'espace entre ce mandrin et cette enveloppe définissant une cavité de moule, comprenant les étapes consistant à faire réagir le prépolymère et la matière contenant de l'hydrogène actif pour former la courroie avec un corps en polyuréthanne élastomère et le ou les câbles d'éléments de traction disposés dans ledit corps, et à enlever cette courroie du moule, caractérisé en ce que le prépolymère est le produit de réaction du polyisocyanate avec un polyol à terminaison amine ou hydroxy dont le degré d'insaturation est inférieur à 0,06 milliéquivalent par gramme de polyol, et a une teneur en isocyanate de 3 à 15 % en poids ; la matière contenant de l'hydrogène actif est un agent d'allongement de chaîne à terminaison hydroxyle ou amine en mélange avec une quantité supplémentaire du polyol ; le prépolymère et l'agent d'allongement de chaîne sont injectés dans la cavité de moule par moulage par injection ou moulage par injection-réaction pour remplir ainsi la cavité du moule et les interstices entre les câbles de traction.

8. Procédé suivant la revendication 7, dans lequel le polyol est un polypropylène-oxyde-polyol.

9. Procédé suivant la revendication 8, dans lequel l'agent d'allongement de chaîne est la 4,4'-méthylène-bis(orthochloraniline).

10. Procédé suivant la revendication 9, dans lequel l'agent d'allongement de chaîne est présent en une quantité de 20 à 40 % en poids par rapport à la somme des poids de l'agent d'allongement de chaîne et du polyol.

11. Procédé suivant la revendication 7, dans lequel le degré d'insaturation du polyol est inférieur à 0,03 milliéquivalent par gramme de polyol.

12. Procédé suivant la revendication 7, dans lequel le prépolymère a une teneur en isocyanate de 7 à 12 % en poids.

13. Procédé suivant la revendication 7, dans lequel le corps en polyuréthanne de la courroie comporte un segment dur et un segment mou qui est formé par moulage par injection-réaction d'un constituant, du côté A, comprenant ledit prépolymère et un constituant, du côté B, comprenant le polyol et l'agent d'allongement de chaîne.

14. Procédé suivant la revendication 7, dans lequel l'agent d'allongement de chaîne est le 1,4-butylèneglycol.
